# EUROPEAN PATENT SPECIFICATION

(11) **EP 1 621 157 B1**
(45) Date of publication and mention of the grant of the patent: **06.10.2010**
(21) Application number: 03721021.8
(22) Date of filing: 01.05.2003
(51) Int. Cl.: A61C 13/097

(54) **METHOD OF ARRANGING ARTIFICIAL TEETH**
VERFAHREN ZUM ANORDNEN VON KÜNSTLICHEN ZÄHNEN
METHODE POUR ALIGNER DES DENTS ARTIFICIELLES

(43) Date of publication of application: 01.02.2006
(73) Proprietor: Heraeus Kulzer Japan Co., Ltd., Osaka-shi, Osaka 540-0001 (JP)
(72) Inventor: KOIDE, Kaoru, Niigata-shi, Niigata 951-8113 (JP)
(74) Representative: Jenkins, Peter David
(86) International application number: PCT/JP2003/005592
(87) International publication number: WO 2004/096077

(56) References cited:
- DE-A1- 3 910 393
- JP-U- 3 058 409
- JP-U- 3 058 409
- US-A- 2 229 780
- US-A- 4 470 815
- US-A- 4 906 186
- US-A- 6 139 321

## Description

### FIELD OF THE INVENTION

The present invention relates to an artificial tooth, a jig for arranging said artificial tooth, an arrangement method of the same and a denture.

### DESCRIPTION OF THE PRIOR ART

It has been typically required in fabricating a denture in the prior art that a set of artificial teeth is secured to a denture baseplate one at a time and in sequence. When fabricating a complete denture according to the prior art, it has been necessary to determine all of the positions, such as a mesio-distal position, a bucco-lingual position, a vertical position, a mesio-distal axis of tooth, a bucco-lingual axis of tooth and a degree of torsiversion, within a jaw, so as to achieve a required level of functionality and aesthetics of each tooth in the denture, including the teeth in the anterior segment and the sixteen molars of the posterior segment. Before securing each tooth in its position on the denture base plate, a required volume of wax must be softened by heating and each tooth must be sequentially placed. This process must be repeated until the entire arrangement of the teeth is achieved. The final arrangement is examined for continuity and minor adjustments are carried out, if desired.

However, disadvantageously a work of arranging the set of artificial teeth in the molar segment in the conventional manner as described above is not only complicated and time-consuming but also requires a specialist's skill and precision. Document DE 39 10 393 discloses a method of arranging artificial teeth with a jig having a plurality of retention holes into which artificied teeth segments are fitted in their tip portions said retention holes are configured to define an arrangement of the teeth in conformity with a predetermined tooth contour. After the teeth have been filled in the jig said teeth are based in a wak base plate. Document US 2 229 780 discloses a jig for positioning teeth, then sections of teeth are secured in segments by means of wax, said segments are then removed from said jig.

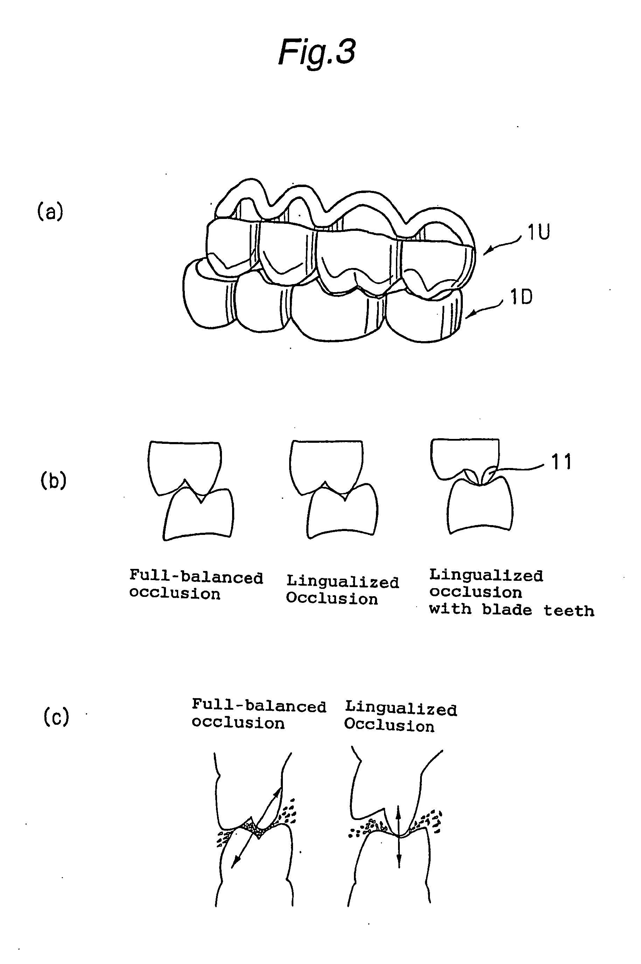

When adjusting an occlusion between the teeth in the molar segment, especially in case of so-called full-balanced occlusion (see Fig. 3(b), (c)), a precise operation can be carried out while easily confirming a condition of occlusion between the artificial teeth in the maxillary side and the mandibular side, in the arrangement of the artificial teeth in the molar segment, since any of the functional cusps make an occlusal contact with the opposite tooth of the artificial teeth in the maxillary side and the mandibular side. In contrast, in case of a so-called lingualized occlusion (see Fig. 3(b), (c)), it has been required that the arrangement of the artificial teeth be made so that only a lingual cusp of the maxillary molar can make an occlusal contact with its opposite mandibular molar; and no contact is made between the buccal cusps of the maxillary and the mandibular artificial teeth, thus allowing a certain gap for gliding movement to take place. In order to fulfill this condition, conventionally when making an arrangement of artificial teeth in the molar segment according to a lingualized occlusion, the practice has been typically, to secure a gap on the order of 1 millimeter in visual measurement between the buccal cusps of the maxillary and the mandibular artificial teeth.

Since the baseline indicating the condition of occlusion between the maxillary and the mandibular artificial teeth is not clear in this conventional method of lingualized occlusion for the arrangement of the artificial teeth in the molar segment, problematically it has been difficult to construct a relation of "pestle and mortar" with a good balance buccally between the maxillary and the mandibular artificial teeth and it has also been difficult to accurately create the gap for gliding movement to take place between the buccal cusps of the maxillary and the mandibular artificial teeth. As discussed above, the difficulty of confirming while carrying out the arrangement of artificial teeth as to whether there exists an adequate occlusal contact relation and/or the condition of occlusion in the molar segment, has been made the baseline of the artificial tooth arrangement in the molar segment according to the lingualized occlusion left unspecified.

On the other hand, there are many types of artificial teeth used to fabricate a denture that have a bottom section provided with a retention hole for the purpose of enhancing the connection with resin used for the denture baseplate. However, if cast resin is used as a resin for the denture baseplate, then there is a chance that packing the retention hole with resin for the baseplate is not performed satisfactorily and bubbles of air could be induced internally in the retention hole, which sometimes results in the artificial tooth falling out after the dental prosthesis has been made. Due to this reason, there is still a need for improving the retention hole in the bottom section of the artificial tooth so that the packing of resin for the baseplate can be satisfactorily performed.

As noted above, in fabricating the denture, especially in making the arrangement of the artificial teeth in the molar segment in the lingualized occlusion, there is still a demand for such artificial teeth and a method of arrangement thereof that allows for the artificial teeth to be arranged quickly, easily and accurately and to be secured rigidly regardless of an experience of a technician.

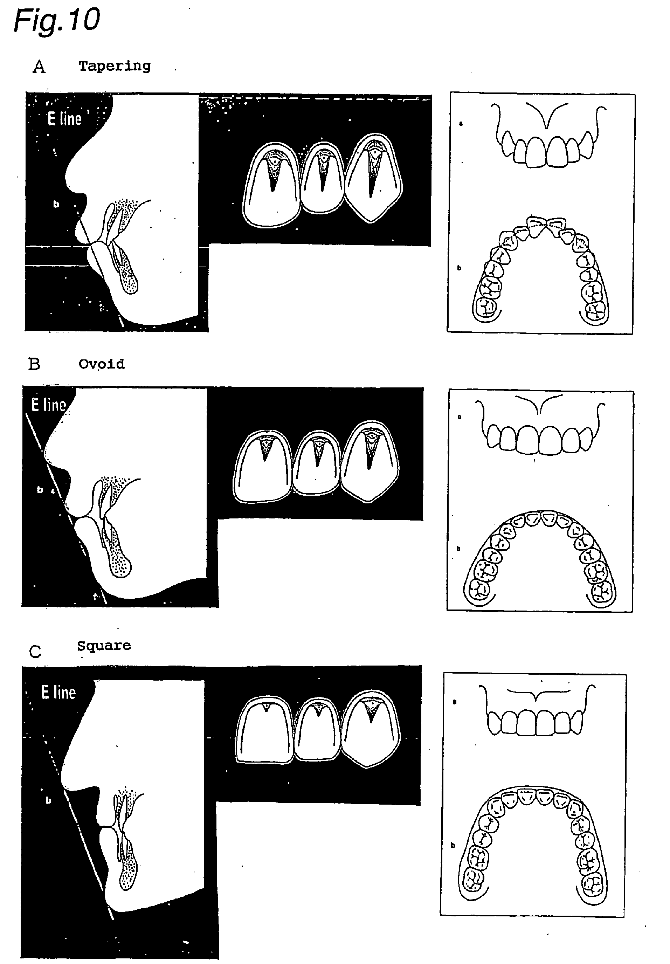

A natural tooth takes a variety of forms, especially in the tooth contour of the maxillary anterior tooth, including contours that are tapering, ovoid and square, depending on the race and personal errors as shown in Figs. 10A, 10B and 10C, on which a three-dimensional form of the tooth arrangement could be determined. That is, the three dimensional form of the tooth could be determined according to the development balance of a central growing lobe against a peripheral growing lobe (see Figs. 10A, 10B and 10C, illustrations in the middle sections, respectively); and based on this development balance, a location of tooth eruption, an angle of tooth axis, a form of alveolus and further a profile (see Figs. 10A, 10B and 10C, illustrations in the left sections, indicated by the aesthetic lines, respectively) could be substantially determined.

It has been commonly recognized that what has a high relevance to the tooth contour in the morphology of face is the profile of interest and that the tooth contour is genetically determined. For example, it has been known that the tapering form is observed overwhelmingly in association with the yellow race (Mongoloid race) to which a large majority of Japanese belongs, while the square form is significantly observed in people of the white race (Caucasoid race). Besides, the tooth axis and the degree of torsiversion for a central incisor, a lateral incisor and a canine, the constituents of the front teeth segment, differ over a significant range depending on the specific contour of a tooth. Taking the square form shown in Fig. 10C as an example, the front teeth erupt straight and vertically without any overlapping of the teeth. Accordingly, such a significant tilt toward the labial direction in the tapering form shown in Fig. 10A is not observed, although it exhibits a relatively straight appearance. Further, observing the square form, the labial faces of the anterior teeth are aligned along a contour of a base of dentoalveolar segment with almost no recognized torsiversion or development of overlapping between the teeth.

On the other hand, in the case of a tapering form as shown in Fig. 10A, it is frequently observed that a space for eruption of teeth is not sufficient and the torsiversion of a tooth tends to be induced. For example, in general, the lateral incisor erupts after the eruption of the central incisor in the maxillary anterior tooth segment, and typically the lateral incisor erupts more lingually in comparison with the central incisor. Further, the problem of insufficient space in the case of canine teeth can be so severe that a mesial section of the canine teeth can compress a distal section of the lateral incisor toward the labial side to cause a torsiversion of the lateral incisor and thus a mesial section of the lateral incisor can compress a distal section of the central incisor toward the labial side to cause a torsiversion of the central incisor. Further, unlike in the case of a square form having a linear contour, the tapering form exhibits a distinctive downwardly convex curve, and so the teeth in the anterior tooth segment erupt as they are compressed toward the labial side, thus assuming a fan shape which extends in the forward and downward direction and ending up with thus completed dental arch.

In the case of the ovoid contour shown in Fig. 10B, it exhibits an intermediate trend between those of the square and the tapering contours.

However, the artificial anterior teeth used in the arrangement in a plate denture has conventionally employed the artificial teeth of the square form commonly seen in the white race but the original tooth contour particular to each individual to be fitted with the denture is often not referred to. Besides, as disclosed in one of the documents of the prior arts, an artificial anterior tooth corresponding to a specific tooth contour is placed on a metal plate for the arrangement in the denture baseplate, in which the baseline for the arrangement only shows an average value derived from the total value determined on the basis of a variety of tooth contours but the difference in the three dimensional dentition particular to each specific tooth contour as shown in Figs. 10A, 10B or 10C is not taken into account and a standardized tooth arrangement is applied instead.

Therefore, for many years there has been a demand for an arrangement system of artificial teeth which takes into consideration a three-dimensional form for each individual which clearly defines an optimal and well-balanced dentition and alveolar part.

### SUMMARY OF THE INVENTION

The present invention provides a method of arranging artificial teeth by using a jig, in which said jig has the plurality of retention holes into which respective artificial anterior teeth constituting an artificial anterior teeth segment can be fitted in their tip portions, said retention hole configured so as to define an arrangement of each one of said fitted artificial anterior teeth in conformity with its predetermined tooth contour, said method comprising the steps of: preparing a set of said jigs for at least each of the plurality of tooth contours; determining a specific tooth contour adaptable for a subject to be fitted with a denture; selecting one of said jigs corresponding to the determined tooth contour; fitting the selected jig with artificial anterior teeth in conformity with the determined tooth contour; and securing by baking, said artificial anterior teeth as fitted in said jig to a denture baseplate at predetermined locations thereof.

According to the present arrangement method, it becomes possible to fabricate a denture which is suitable for the subject to be fitted easily in a short time.

In another aspect of the present invention, there is provided arrangement method that is characterized in further comprising the steps of: providing an artificial molar segment formed as a dental prosthesis of artificial molars designed for the lingualized occlusion, comprising the total of four teeth including a first premolar, a second premolar, a first molar and a second molar in the maxilla or the mandible, which are interconnected in a single prosthesis; positioning said artificial molar segment in a denture baseplate with said artificial anterior teeth having been secured thereto by baking; and securing said artificial molar segment to said denture baseplate by baking.

In an embodiment of the present invention, the total of four consecutive artificial teeth consisting of the first premolar, the second premolar, the first molar and the second molar are securely interconnected in a single prosthesis, therefore making it possible for a less experienced technician to accomplish a satisfactory arrangement of artificial teeth for the molar segment easily in a short time. Further, since the artificial molar designed for the lingualized occlusion is employed, as compared to the full-balanced occlusion, even the dental prosthesis of four interconnected artificial teeth can still preserve the aesthetic continuity in mesio-distal and bucco-lingual axes of tooth for the aesthetic tooth contour in the buccal surface, and further a bilateral-balanced occlusion can be constructed preserving the general principle for the adequate functional occlusal contact manner in the maxillary and mandibular dentitions.

According to a preferred embodiment of the present invention, a protrusion may be formed in a buccal cusp of at least one artificial molar among the first premolar, the second premolar, the first molar and the second molar in either one of the maxilla or the mandible, so as to define a gap for gliding movement to take place with respect to an oppositely-located corresponding artificial molar designed for the lingualized occlusion in the other of the maxilla or the mandible.

The protrusion used to determine the mating position of interest can successfully ensure the adequate positioning of the buccal cusps between the artificial maxillary and mandibular teeth during the arrangement process of the artificial teeth in the molar segment. Owing to this, the baseline for the occlusal contact relation during the mating between the artificial maxillary and mandibular teeth in the molar segment in the lingualized occlusion can be established and the precise construction of an adequate gap for the gliding movement can be easily accomplished as well.

According to another preferred embodiment of the present invention a groove may be formed in a bottom side of the dental prosthesis of four interconnected artificial molars designed for a lingualized occlusion, which extends throughout the four teeth in the mesio-distal direction and open at one end of the first premolar and one end of the second molar.

This groove serves to ensure the packing of resin for a baseplate into a retention hole located in a bottom portion of the dental prosthesis of the artificial teeth and suppresses generation of air bubbles during the fabrication of a denture. In addition, the groove provides another function of protecting the artificial teeth from falling out, thereby exerting the effect of preventing the falling out of artificial teeth. Furthermore, if this grooved artificial tooth is used in the partial denture, the groove can also function as a guide when adaptively removing a portion of the artificial teeth interfering with a leg portion of a support device and thus work effectively to facilitate the adaptive-removing operation.

The above-described protrusion is not limited to a dental prosthesis of four interconnected artificial molars designed for the lingualized occlusion but may be applicable to an isolated tooth or a dental prosthesis comprising any number of interconnected artificial molars other than four. In this aspect, the present invention may provide that at least one of a first premolar, a second premolar, a first molar and a second molar in either of the maxilla or the mandible is provided, each formed as an artificial molar designed for the lingualized occlusion, and a protrusion is formed in a buccal cusp of said at least one artificial molar of a dental prosthesis so as to define a gap for gliding movement to take place with respect to a corresponding artificial molar designed for the lingualized occlusion, which is oppositely located in the maxilla or the mandible.

Further, the groove as described above is not limited to the dental prosthesis of four interconnected artificial molars designed for the lingualized occlusion but may also be applicable to an isolated tooth, a dental prosthesis of artificial molar designed for other than the lingualized occlusion and a dental prosthesis comprising any number of interconnected artificial molars other than four. In this aspect, the present invention may provide that at least one of a first premolar, a second premolar, a first molar and a second molar in either of the maxilla or the mandible is provided, and a groove is formed in a bottom side of a dental prosthesis extending in a mesio-distal direction through at least one artificial molar, said groove opening at both ends thereof.

The method of the present invention may use a jig to fabricate a denture. This jig has a plurality of retention holes into which a plurality of artificial teeth can be fitted in their tip portions, in which when the artificial tooth is fitted in the retention hole, the jig comes in contact with the artificial tooth in a labial surface and a lingual surface including a tip portion thereof in conformity with a predetermined tooth contour and thus can define an arrangement of each one of said fitted artificial teeth. Most preferably, each of the artificial anterior teeth is brought into contact with the jig at a buccal surface and a lingual surface including a tip portion thereof when it is fitted in the jig, and thereby a mesio-distal position, a bucco-lingual position, a vertical position, a mesio-distal axis of tooth, a bucco-lingual axis of tooth and a degree of torsiversion, each in conformity with a predetermined tooth contour but not based on an average value, can be determined respectively. It is to be noted that preferably the predetermined tooth contour is selected from a group at least consisting of tapering, ovoid and square forms regarding the anterior tooth.

Therefore, according to the present invention, it becomes possible for even a less experienced technician to construct an adequate tooth axis and torsiversion and continuity in dentition based on the form of the maxillary central incisor, lateral incisor and canine by the application of the jig adapted in conformity with the aesthetic arrangement standard representing a feature of the dentition in the dental prosthesis of artificial maxillary anterior teeth defined by the tapering, ovoid or square form.

Other aspects and effects of the present invention will be more clearly understood by reading the following description on the preferred embodiments of the present invention with reference to the attached drawings.

### BRIEF DESCRIPTION OF THE DRAWINGS

Fig. 1A is a side elevational view of a dental prosthesis of four interconnected artificial molars for maxilla designed for the lingualized occlusion for use in a method according to an embodiment of the present invention, viewed from the buccal side;
Fig. 1B is a perspective view of the dental prosthesis of four interconnected artificial molars for maxilla of Fig. 1A, viewed from the buccal side and the occlusal surface side (the direction of occlusion indicated by the arrow);
Fig. 2A is a side elevational view of a dental prosthesis of four interconnected artificial molars for mandible designed for the lingualized occlusion according to an embodiment of the present invention, viewed from the buccal side (the direction of occlusion indicated by the arrow);
Fig. 2B is a perspective view of the dental prosthesis of four interconnected artificial molars for mandible of Fig. 2A, viewed from the buccal side and the occlusal surface side (the direction of occlusion indicated by the arrow);
Fig. 2C is a perspective view of the dental prosthesis of four interconnected artificial molars for mandible of Fig. 2A, viewed from the lingual side and the occlusal surface side (the direction of occlusion indicated by the arrow);
Fig. 2D is a side elevational view of the dental prosthesis of four interconnected artificial molars for mandible of Fig. 2A, viewed from the lingual side (the direction of occlusion indicated by the arrow);

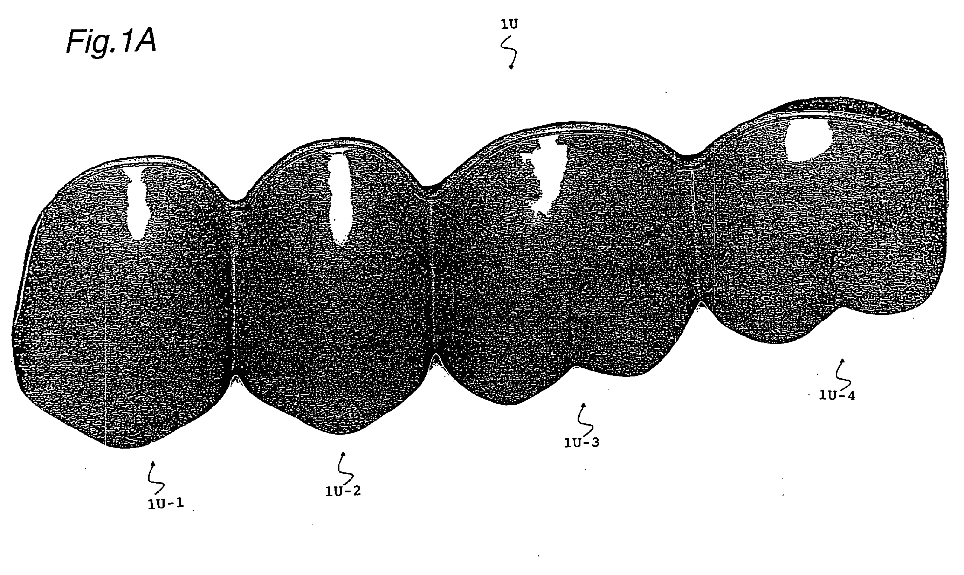

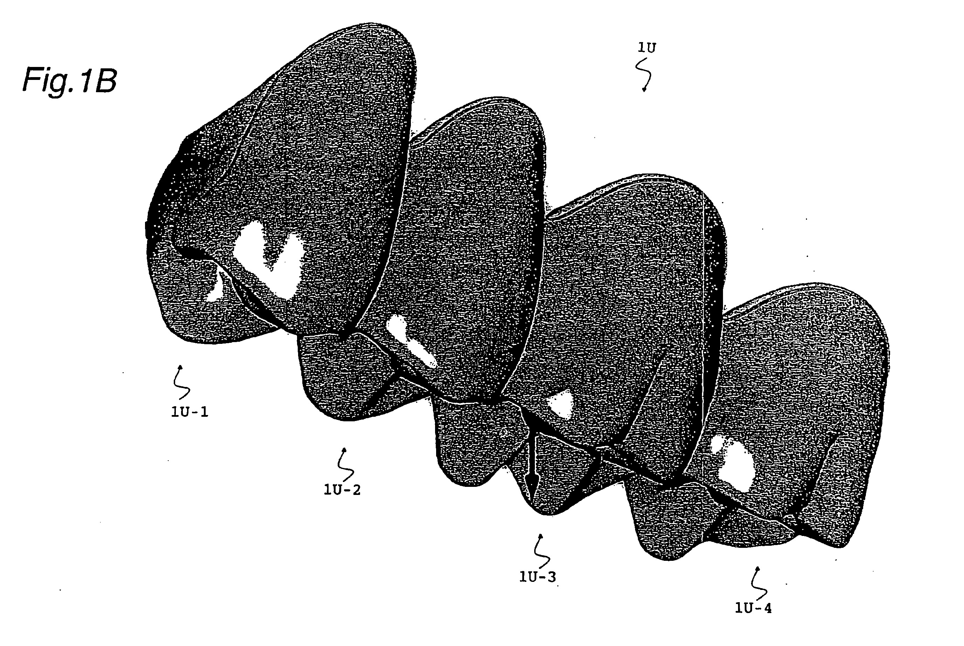

Fig. 3 shows a condition of occlusion of dental prostheses between maxillary molars and mandibular molars thereof, wherein Fig. 3(a) is a perspective view of the occlusal condition of the dental prostheses each consisting of four interconnected artificial molars designed for the lingualized occlusion shown in Fig. 1, viewed from the lingual side; Fig. 3(b) is a comparative illustration of a sectional view of the occlusal condition for a single pair of teeth in the following three cases: the full-balanced occlusion; the lingualized occlusion not configured to have a blade form; and the lingualized occlusion configured to have a blade form, respectively; and Fig. 3(c) is a comparative illustration of a food packing effect in the full-balanced occlusion and in the lingualized occlusion;
Fig. 4 is a diagram showing the dental prostheses for the maxillary and the mandibular molars each consisting of four interconnected artificial molars designed for the lingualized occlusion of Fig. 1, viewed from the bottom side;
Fig. 5 is a flow chart showing by way of example a procedure for arranging and securing the dental prosthesis of four interconnected artificial molars for the maxilla designed for the lingualized occlusion for use in a method according to an embodiment of the present invention into a maxillary biteplate;
Fig. 6 is a flow chart showing by way of example a procedure for arranging and securing the dental prosthesis of four interconnected artificial molars for the mandible designed for the lingualized occlusion for use in a method according to an embodiment of the present invention, the securing being into a mandibular biteplate so as to mate with the maxillary denture constructed by the procedure of Fig. 5;
Fig. 7 shows a jig used in the present invention, wherein Fig. 7A is a perspective view of the jig viewed from the lingual side; Fig. 7B is a perspective view of the jig viewed from the labial side; Fig. 7C is a top view of the jig fitted with a set of artificial anterior teeth; and Fig. 7D is a perspective view illustrating the attaching operation of the set of artificial anterior teeth to a maxillary biteplate using the same jig;
Fig. 8 is a flow chart showing a procedure according to an embodiment of the present invention for fabricating a denture in accordance with a specific tooth contour using a jig ;
Fig. 9 shows a plurality of jigs, each prepared for a specific tooth contour of an artificial anterior tooth;
Fig. 10A shows a profile, a tooth contour, (a) a front side of a dentition and (b) an occlusal surface side of the same dentition in the tapering type of anterior tooth;
Fig. 10B shows a profile, a tooth contour, (a) a front side of a dentition and (b) an occlusal surface side of the same dentition in the ovoid type of anterior tooth;
Fig. 10C shows a profile, a tooth contour, (a) a front side of a dentition and (b) an occlusal surface side of the same dentition in the square type of anterior tooth;
Fig. 11A is a perspective view of an artificial maxillary molar that is isolated and has a protrusion for use in a method according to another embodiment of the present invention;
Fig. 11B is a side elevational view of an artificial mandibular molar that is isolated and has a protrusion for use in a method according to another embodiment of the present invention;
Fig. 12A is a side elevational view showing a mating condition between the isolated artificial maxillary molar shown in Fig. 11A and its opposing mandibular molar;
Fig. 12B is a side elevational view showing a mating condition between the isolated artificial mandibular molar shown in Fig. 11B and its opposing maxillary molar; and
Fig. 13 shows a set of isolated artificial molar segment for use in a method according to another embodiment of the present invention, viewed from the base side.

### DESCRIPTION OF THE PREFERRED EMBODIMENTS

### Embodiment of dental prosthesis of four interconnected artificial molars

Figs. 1A and 1B show, respectively, a dental prosthesis of four interconnected artificial maxillary molars, "1U", designed for the lingualized occlusion for use in a method according to an embodiment of the present invention. The dental prosthesis of artificial maxillary molars 1U is made of hard resin, for example, and comprises a first premolar 1U-1, a second premolar 1U-2, a third molar 1U-3 and a fourth molar 1U-4, which are securely interconnected to form the dental prosthesis. It will be appreciated that each of these artificial molars has been arranged such that a mesio-distal position, a bucco-lingual position, a vertical position, a mesio-distal axis of tooth, a bucco-lingual axis of tooth and a degree of torsiversion are in conformity with the aesthetic standard as well as in complying with the general principle of occlusal contact manner in each specific tooth.

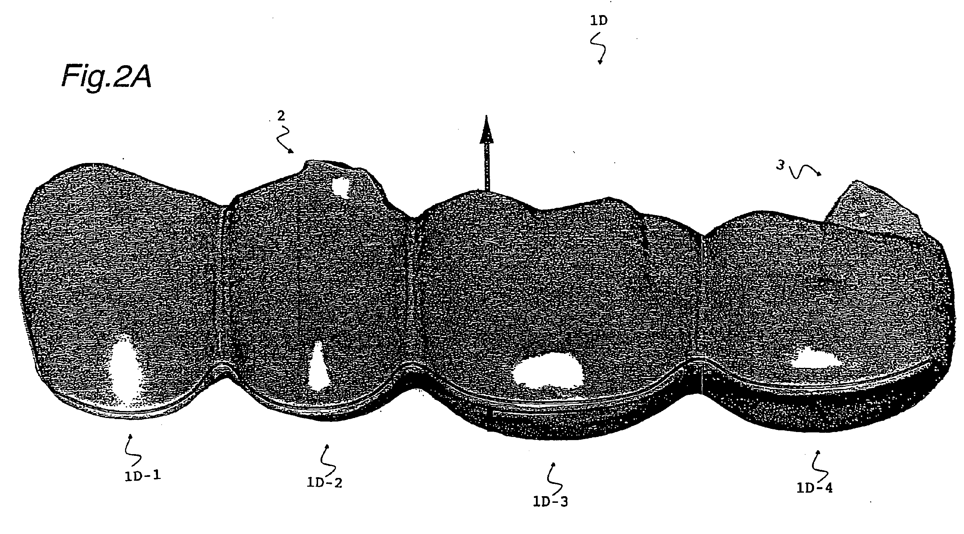

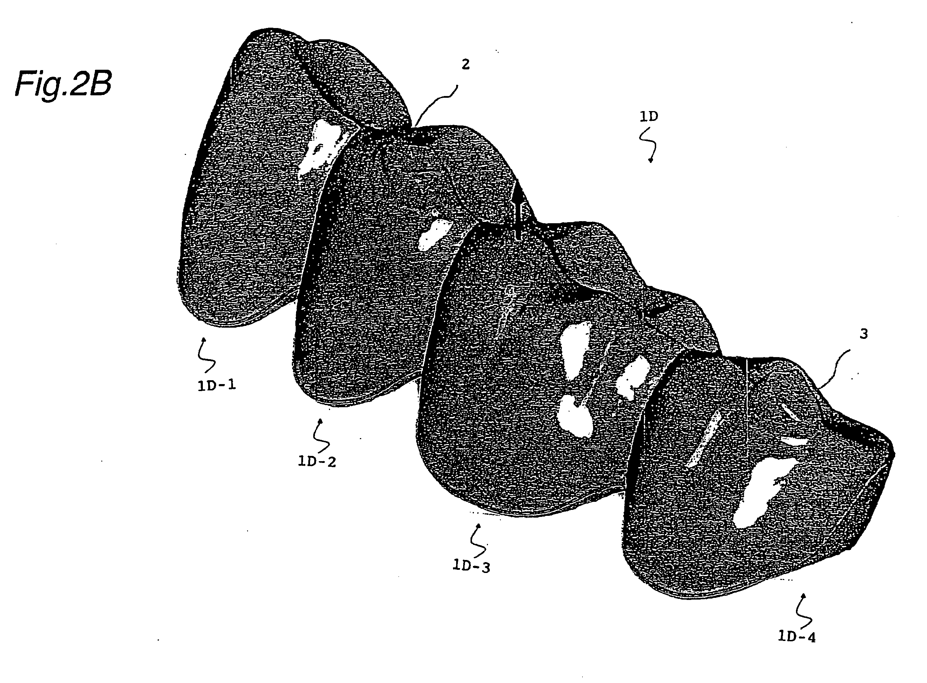

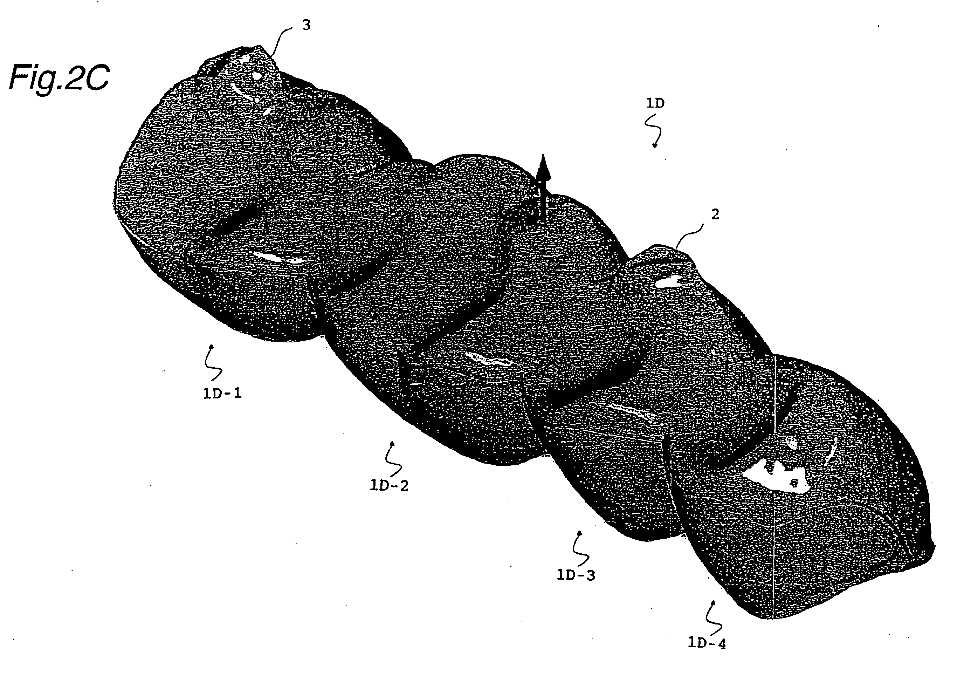

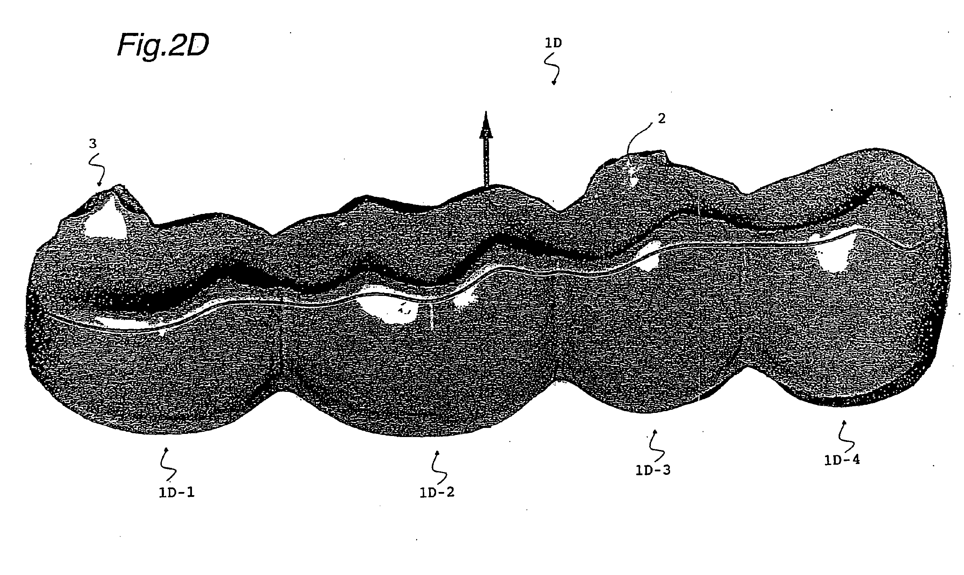

Referring to Figs. 2A to 2D, there is shown a dental prosthesis of four interconnected artificial mandibular molars, "1D", designed for the lingualized occlusion for use in a method according to an embodiment of the present invention, which has a mating relation with the dental prosthesis of artificial maxillary molars 1U as shown in Figs. 1A and 1B. The dental prosthesis of artificial mandibular molars 1D is also made of hard resin, for example, and comprises a first premolar 1D-1, a second premolar 1D-2, a third molar 1D-3 and a fourth molar 1D-4, which are securely interconnected to form the dental prosthesis.

It will be appreciated that each of the dental prosthesis of artificial maxillary molars 1U and the dental prosthesis of artificial mandibular molars 1D has been arranged such that the mesio-distal position, the bucco-lingual position, the vertical position, the mesio-distal axis of tooth, the bucco-lingual axis of tooth and the degree of torsiversion are in conformity with the aesthetic standard as well as in complying with the general principle of occlusal contact manner in each specific tooth. It is to be noted that the dental prosthesis of artificial maxillary molars 1U and the dental prosthesis of artificial mandibular molars 1D have been formed in advance in such a way that the two dental prostheses can mate stably with each other as shown in Fig. 3(a).

Further, each molar in the dental prosthesis of artificial maxillary molars 1U and the dental prosthesis of artificial mandibular molars 1D is configured in the form of lingualized occlusion, in which a gap for gliding movement to take place is secured between a maxillary buccal cusp and a mandibular buccal cusp as shown in the middle illustration of Fig. 3(b). This lingualized occlusion has an advantage in both aspects, that of conserving the remaining tissue and improving the functionality recovery rate for a subject to be fitted with a denture, because the food spillover effect during its functioning is high and an occlusal contact area is small in the lingualized occlusion as shown in Fig. 3(c) as compared to the full-balanced occlusion.

More preferably, each of the lingual cusps of the four teeth from the maxillary first premolar 1U-1 through the maxillary second molar 1U-4 should be given a blade form 11 as shown in the illustration in the right of Fig. 3(b). Such blade form, if given, can further improve the advantageous effects that the occlusal area is small and the food spillover effect is high, provided by the lingualized occlusion. Specifically, in the lingualized occlusion, a force required to break a portion of food of different nature is significantly reduced and advantageously this allows the food to be eaten with greater ease, which otherwise would be difficult to be eaten with a denture.

As described above, if the four artificial molars including the first premolar, the second premolar, the first molar and the second molar are interconnected, the arranging operation could be easier, whereas usually such a configuration, if applied to the full-balanced occlusion, could make it extremely difficult to maintain an adequate relation of functional occlusal contact between the maxillary dentition and the mandibular dentition so as to construct a bilateral-balanced occlusion while maintaining the aesthetic continuity in the mesio-distal and the bucco-lingual axes of teeth for the aesthetic tooth contours in the buccal surfaces of the teeth for each specific case, thus inhibiting the clinical application of the dental prosthesis of four interconnected artificial molars. However, in the lingualized occlusion according to the illustrated embodiment, which allows only the lingual cusps of the maxillary molars to have occlusal contact with the mandibular molars, even if the first premolar, the second premolar, the first molar and the second molar are firmly interconnected, it would be substantially feasible to maintain an adequate relation of functional occlusal contact between the maxillary dentition and the mandibular dentition so as to construct a bilateral-balanced occlusion while maintaining the aesthetic continuity in the mesio-distal and the bucco-lingual axes of teeth for the aesthetic tooth contours in the buccal surfaces of the teeth.

Turning back to Figs. 2A to 2D again, protrusions 2 and 3, each referred to as a teeth positioner, are formed in the buccal cusps of the second premolar 1D-2 and the fourth molar 1D-4, respectively, in the dental prosthesis of artificial mandibular molars. Those protrusions 2 and 3 have their locations, sizes and shapes specified so that they can engage with the second premolar 1U-2 and the fourth molar 1U-4, respectively, in the dental prosthesis of artificial maxillary molars to thereby ensure the gap for gliding movement to take place in the lingualized occlusion to be provided accurately during the manipulation for the tooth arrangement, which will be described later in more detail.

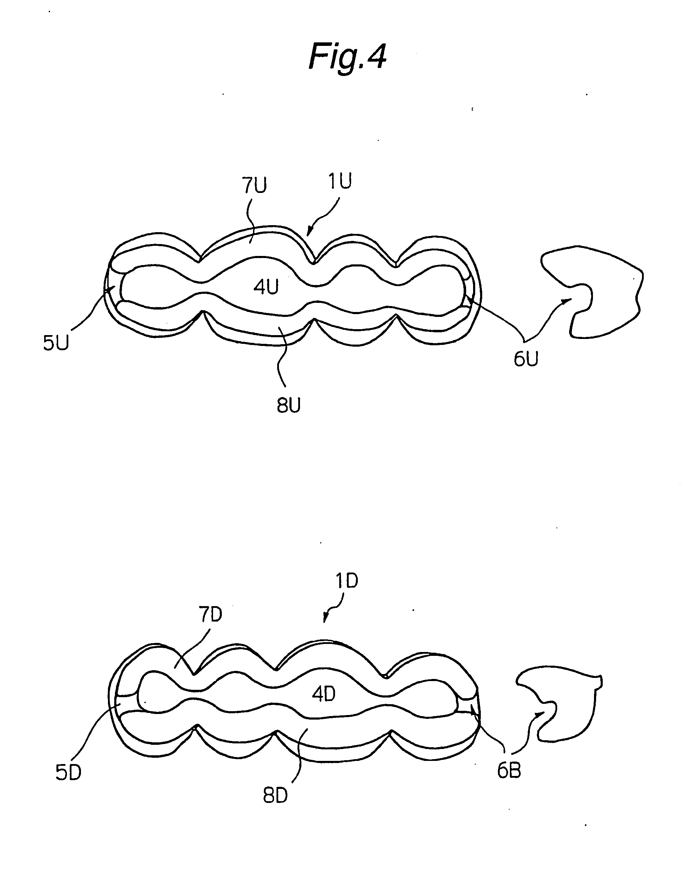

Referring now to Fig. 4, grooves 4U and 4D are formed in the bottom surface of the dental prosthesis of artificial maxillary molars 1U and the dental prosthesis of artificial mandibular molars 1D, respectively, which extend along the mesio-distal direction through the bottom portions of the four interconnected teeth. The grooves 4U and 4D are defined in the buccal side and in the lingual side by bottom walls 7U and 8U and the bottom walls 7D and 8D, respectively. Further, the grooves 4U and 4D are open in their mesial ends by way of openings 5U and 5D, respectively, and open in their distal ends by way of openings 6U and 6D, respectively.

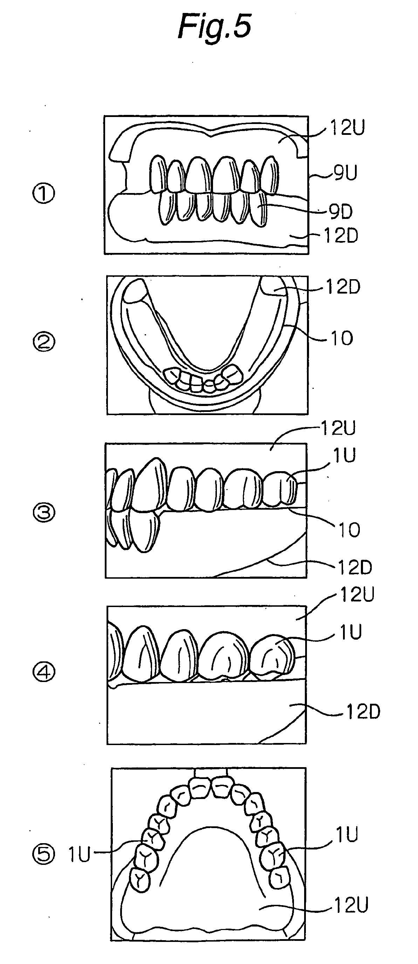

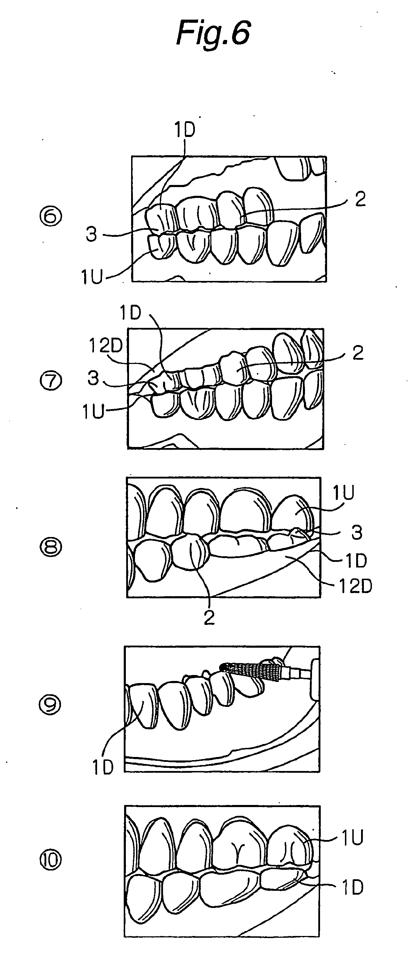

An arrangement operation of the dental prosthesis of four interconnected artificial maxillary molars 1U and the dental prosthesis of four interconnected artificial mandibular molars 1D according to the present embodiment will now be described with reference to Figs. 5 and 6.

Fig. 5 shows primarily the arrangement operation in the maxillary side. Firstly, after a dental articulator having been adjusted by using a lateral check bite, maxillary artificial anterior teeth 9U and mandibular artificial anterior teeth 9D are arranged in a maxillary biteplate 12U and a mandibular biteplate 12D, respectively, while giving extra consideration to the aesthetics and functionality in accordance with each specific case (Step 1). Subsequently, the mandibular biteplate 12D is placed on a support table (Step 2), and the dental prosthesis of four interconnected artificial maxillary molars 1U is placed on and held as compressed against the mandibular biteplate 12D so that a lingual cusp top of a first premolar and a mesial cusp top of a second molar of the dental prosthesis of artificial maxillary molars 1U meet a top surface 10 of biteplate of the mandibular biteplate 12D (Step 3). Then, the wax in the maxillary biteplate 12U is softened after an appropriate quantity thereof having been removed, and then the dental articulator is closed (Step 4), where the dental prosthesis of four interconnected artificial maxillary molars 1U is attached by baking so as to be integral with the denture baseplate 12U, thus completing the arrangement of the maxillary molars in both sides (Step 5).

Fig. 6 shows an arrangement operation in the mandibular side. The dental articulator is turned upside down, and the dental prosthesis of artificial mandibular molars 1D is accurately positioned so as to mate with the dental prosthesis of artificial maxillary molars 1U by using the teeth positioners 2 and 3 (Step 6). The positioning with the teeth positioners 2 and 3 can define the relation of occlusal contact during the mating and it facilitates the well-balanced construction of the bucco-lingual "pestle and mortar" relation and ensures an adequate gap for gliding movement to take place during the arrangement of the artificial teeth in the molar segment. Subsequently, the wax in the mandibular biteplate 12D is softened after an appropriate quantity thereof having been removed and then the dental articulator is closed (Step 7), where the dental prosthesis of four interconnected artificial mandibular molars 1D is attached by baking so as to be integral with the mandibular biteplate 12D, thus completing the arrangement of the maxillary molars in both sides (Step 8). It is further required in this stage that the dental articulator is caused to make a protrusive excursion to thereby confirm that the anterior-posterior balance can be secured, wherein a minor adjustment of the inclination of occlusal plane may be applied, if desired. After that, the teeth positioners 2 and 3 in the artificial mandibular molars are removed (Step 9) and a uniform gap for gliding movement to take place is created in the lingualized occlusion (Step 10). Ultimately, the lingualized occlusion that can hold a bilateral-balance over a broad range can be achieved by the grinding-in. This process can be finished by adaptively removing any portion of early contact and interference that can be impressed on a mandibular occlusal table via a piece of articulation paper. This grinding-in requires a smaller amount of adjustment and thus can be achieved in a shorter time as compared to the case of prior art on artificial teeth.

The dental prostheses of four interconnected artificial molars 1U and 1D for the lingualized occlusion were actually fabricated as a prototype unit and used to make the arrangement operation of artificial teeth in the molar segment of a complete denture, and it was observed that the arrangement could be well provided by simply making a minor adjustment of the inclination of occlusal plane so as to ensure the anterior-posterior occlusal balance during the arrangement step and so the arranging process could be completed in a significantly short time, with greater ease and more accurately as compared to the prior art technique, in which a set of teeth is arranged in a one-by-one manner.

In a further trial, after the completion of the arrangement of the artificial teeth, the denture was buried in a flask, where the wax was melted and the packing with a volume of cast resin for the baseplate was performed through the flow grooves 4U and 4D (Fig. 4) in the bottom surfaces of the artificial molars, and it was observed in comparison with the retention form in the prior art that the resin flowed significantly smoothly. The result demonstrates that this configuration for use in a method according to the present invention can work effectively to suppress the generation of air bubbles within the resin and thus make the packing with the resin for the baseplate highly reliable. Owing to this effect in combination with the effect of rigid retention obtainable from the configuration of the flow grooves 4U and 4D, the method of present invention can prevent the falling out of teeth in the finished denture. Furthermore, when the need arises to remove a part of the bottom surface of the artificial teeth in order to make an adjustment in a region interfering with a supporting device, for example, especially in a partial denture, each of the openings 5U and 5D and the openings 6U and 6D of the flow grooves 4U and 4D serves as a guide for modifying the form from an adjacent base bracket with a removable bar, and helps effectively make the technical operation accurate and yet extremely easy.

### Embodiment of denture fabrication jig

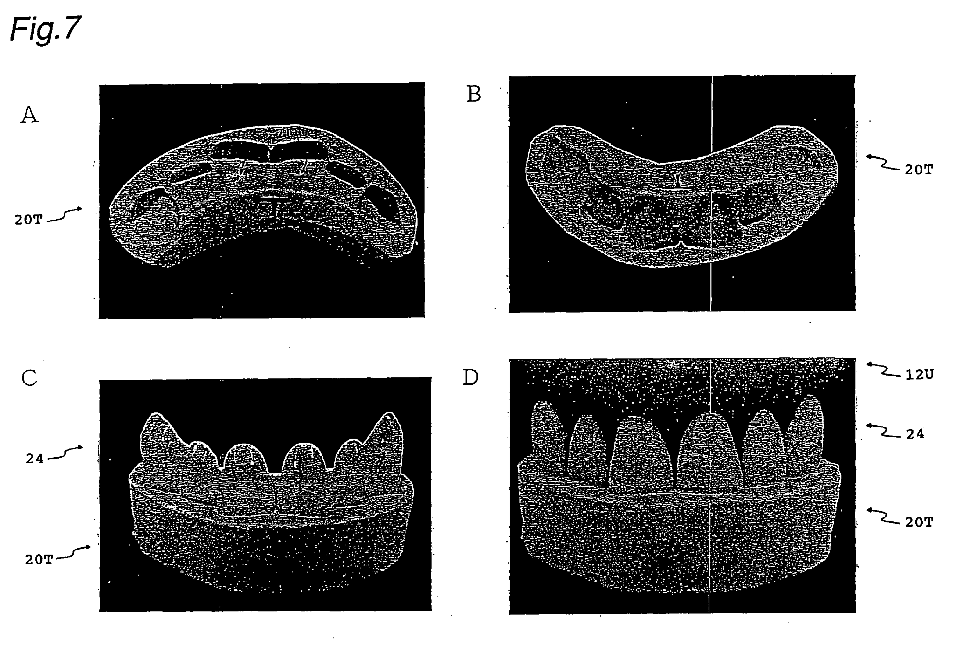

Figs. 7A and 7B show a jig 20T used for fabricating a denture according to an embodiment of the method of the present invention. The jig 20T shown in the drawings represents a jig for the maxillary anterior teeth having a tapering tooth contour, for example, which includes a plurality of tooth holes 21 into which a total of six artificial anterior teeth consisting of maxillary central incisors, lateral incisors and canines are to be fitted in their tip regions. If fitted in respectively corresponding tooth holes 21, each of the artificial anterior teeth is not only held therein but also comes into contact at a labial side and a lingual side including the tip portion thereof with the jig, and this allows the three dimensional arrangement of the artificial anterior teeth against a body of the jig 20 to be uniquely defined in accordance with each specific tooth contour. That is, as shown in Fig. 7C, if the total of six artificial anterior teeth 24 are fitted in the tooth holes 21 of the jig 20T of the present embodiment corresponding to the tapering tooth contour, the mesio-distal position, the bucco-lingual position, the vertical position, the mesio-distal axis of tooth, the bucco-lingual axis of tooth and the degree of torsiversion, all of which are in accordance with the tapering tooth contour, are determined, respectively, for each of the artificial anterior teeth (see Fig. 10A).

In fabricating a denture, the jig 20 with the artificial anterior teeth 24 fitted in the tooth holes thereof as shown in Fig. 7D is set in the dental articulator, though not shown, where the artificial anterior teeth 24 are secured by baking in predetermined positions in the maxillary biteplate 12U, respectively. This allows the construction of adequate axis and torsiversion of each tooth and the continuity of dentition for the central incisors, the lateral incisors and the canines to be achieved easily, and at the same time it allows the appropriate arrangement of the artificial teeth to be provided in an extremely short time. It is to be noted in the jig 20 according to the illustrated embodiment, in comparison with the case of the prior art technique in which firstly the wax is applied onto a metal crown plate, secondly the artificial maxillary anterior teeth are loaded onto the crown plate with the tip portions of the teeth in contact with the plate and finally they are set in the biteplate, that since the artificial teeth come into contact at their labial and lingual surfaces with the jig, the three dimensional arrangement of each of the anterior teeth can be defined in accordance with the specific tooth contour of the anterior teeth without any ambiguity. Furthermore, according to the illustrated embodiment, since the wax is not applied onto the jig 20, the arranging operation of the teeth can be carried out in a more simplified flow of processes.

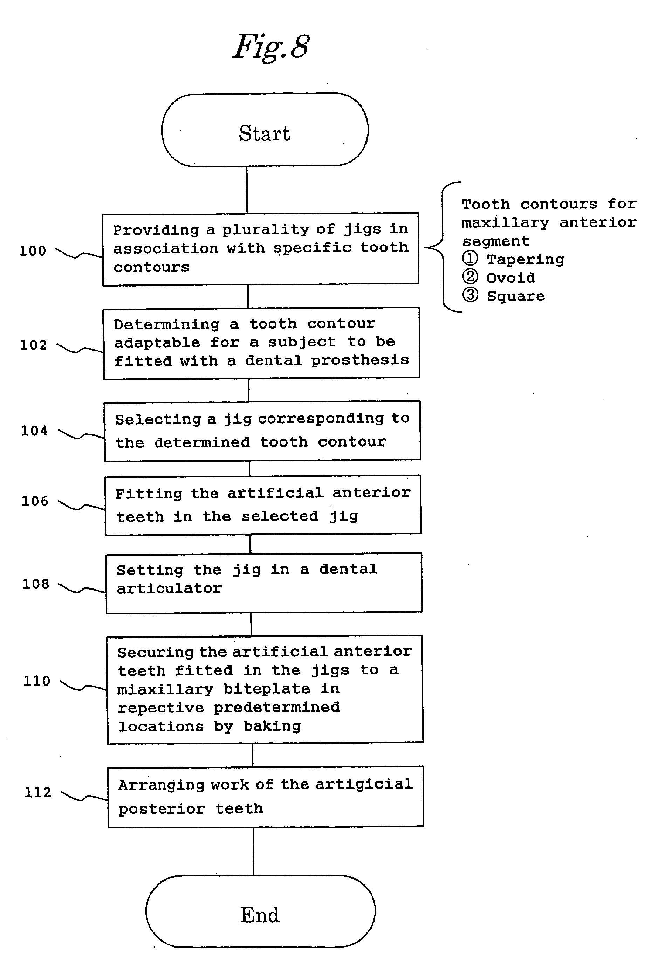

Accordingly, if such a jig that is in conformity with the aesthetic arrangement standard indicating each specific feature in the dentition of the artificial maxillary anterior teeth, including the tapering, ovoid and square forms, is previously fabricated for each specific tooth contour, then a system enabling the adequate arrangement of teeth corresponding to any of a variety of artificial tooth contours can be realized. A flow chart of Fig. 8 shows an example of a method according to the present invention for employing such an arrangement system using the jig 20.

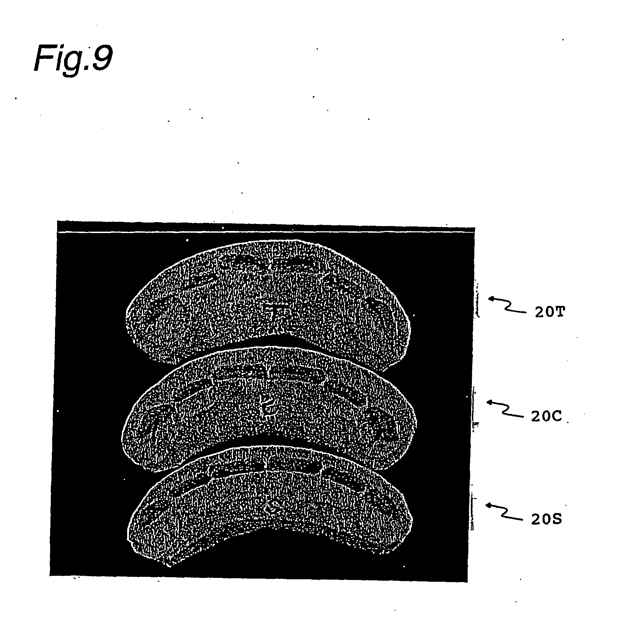

A plurality of jigs adapted to a plurality of tooth contours, respectively, are previously prepared (Step 100 of Fig. 8). For example, jigs 20T, 20C and 20S are prepared, which are associated with the tapering, the ovoid and the square tooth contours, as shown in Fig. 9. Further, a plurality of jigs adapted to differently sized dental prostheses, respectively, are prepared for respective specific tooth contour, as well.

Then, a suitable tooth contour for a subject to be fitted with the denture is determined based on his/her profile and the likes having a high relevance to the tooth contour (Step 102). The jig corresponding to the determined tooth contour is selected from the prepared set of jigs (Step 104). At this stage, a selection is made of a jig having a denture size adapted to the subject to be fitted with the denture. Subsequently, the artificial anterior teeth having the tooth contour determined in Step 102 are mated in the selected jig (Step 106). The jig is then set in the dental articulator (Step 108), and the mated artificial anterior teeth are secured by baking in their predetermined positions in a maxillary biteplate (Step 110). Finally, the arrangement operation of the artificial molar segment is performed over the maxillary biteplate that has been fitted firmly with the artificial anterior teeth (Step 112).

It is to be noted that the arranging operation in Step 112 may perform the procedure shown in Figs. 5 and 6 using the dental prostheses of four interconnected artificial molars 1U and 1D designed for the lingualized occlusion, for example. Alternatively, a single artificial molar may be fitted for every single tooth or a dental prosthesis of artificial molars comprising two or three interconnected teeth may be fitted in.

Further, the arrangement operation of the artificial molar segment in Step 112 may be added with such a sub step, in which a plurality of artificial molar segments are prepared before hand and a specific one to be fitted is selected from among them, while considering the continuity in the aesthetic and occlusal contact relation to the artificial anterior teeth segment selected in Step 104.

The present invention has been described with reference to respective embodiments, which are given by way of illustration only but not intended to limit the scope of the present invention, and many variations and modifications may be made without departing from the scope of the present invention that is defined by the appended claims.

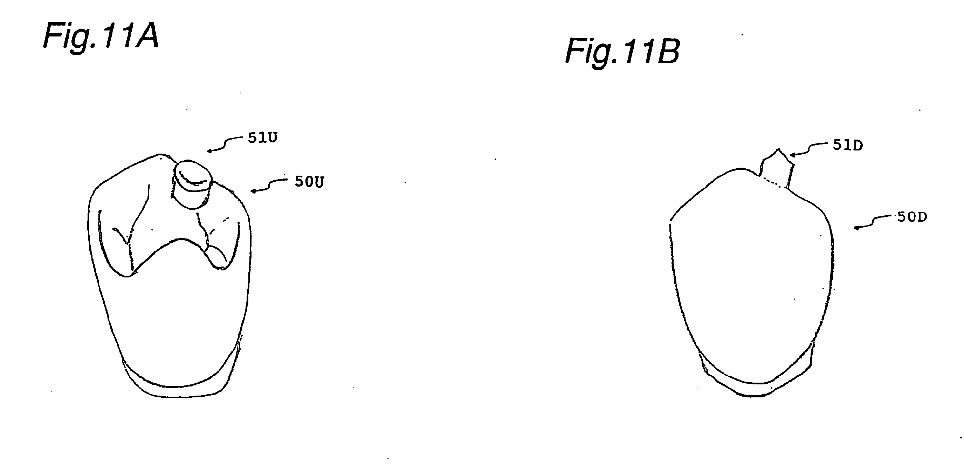

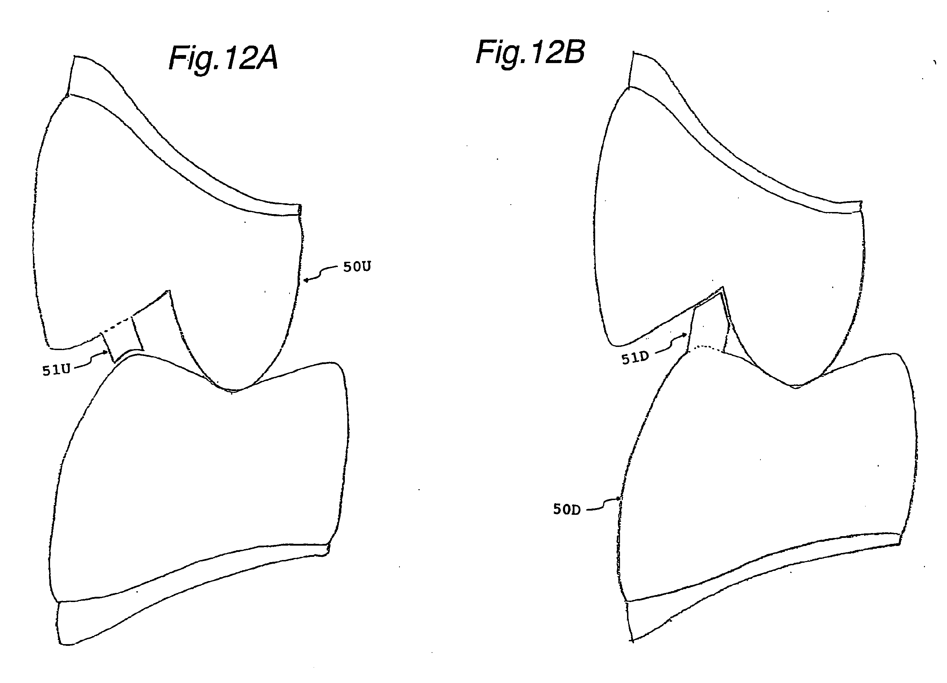

For example, although the teeth positioners 2 and 3 are formed in the mandibular prosthesis of four interconnected artificial molars, they may be formed in the maxillary prosthesis. Further, the type and number of the molar in which the teeth positioner is to be formed may be varied as desired. For example, as shown in Fig. 11A, a protrusion 51U may be disposed in an isolated artificial maxillary molar 50U or a protrusion 51D may be disposed in an isolated artificial mandibular molar 50D. For further understanding, Figs. 12A and 12B show mating relations between the artificial molars 50U and 50D with respect to their opposing molars, respectively.

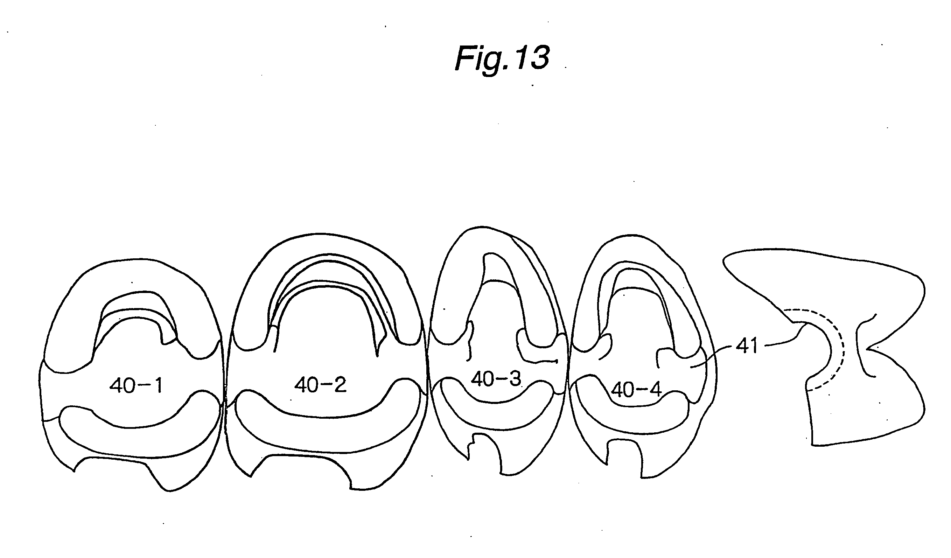

Further, the flow groove to be formed in the bottom portion of the artificial tooth is not limited to the prosthesis of four interconnected artificial molars but may be applicable to a single isolated tooth as well as other types of prosthesis of interconnected artificial teeth than that of the four-interconnected-teeth. For example, as shown in Fig. 13, the flow grooves 40-1, 40-2, 40-3, 40-4,... having openings 41 in both ends of each isolated tooth of a plurality of artificial molars may be formed. Further, the flow groove used according to the embodiment of the method of the present invention may be applicable to the artificial molars for other than the lingualized occlusion.

Further, although the above description has been directed to the application of the dental prosthesis of four interconnected artificial molars designed for the lingualized occlusion to the fabrication of a complete denture with reference to Figs. 5 and 6, it is needless to say that this dental prosthesis of four interconnected artificial molars may be applied to the fabrication of a partial denture.

Yet further, although Fig. 7 shows the jig for the maxillary denture by way of example, the jig for a mandibular denture may be constructed. Furthermore, the jig shown in Fig. 7 may be used to arrange an artificial anterior tooth in a partial biteplate.

## Claims

1. A method of arranging artificial teeth by using a jig (20T), in which said jig has the plurality of retention holes (21) into which respective artificial anterior teeth (9D, 9U) constituting an artificial anterior teeth segment can be fitted in their tip portions, said retention hole configured so as to define an arrangement of each one of said fitted artificial anterior teeth (9D, 9U) in conformity with its predetermined tooth contour, said method comprising the steps of:
preparing (100) a set of said jigs for at least each of the plurality of tooth contours;
determining (102) a specific tooth contour adaptable for a subject to be fitted with a denture;
selecting (104) one of said jigs corresponding to the determined tooth contour;
fitting (106) the selected jig with artificial anterior teeth (9D, 9U) in conformity with the determined tooth contour; and
securing (110) by baking, said artificial anterior teeth (9D, 9U) as fitted in said jig to a denture baseplate (12D, 12U) at predetermined locations thereof.

2. A method in accordance with claim 1, in which said artificial anterior teeth segment comprises the total of six maxillary right and left central incisors, lateral incisors and canines, and said predetermined tooth contour is selected from a group consisting of tapering, ovoid and square forms.

3. A method in accordance with claim 1 or 2, wherein said step of fitting said jig with said artificial anterior teeth, each of said respective artificial anterior teeth (9D,9U) coming into contact with said jig (20T) in a buccal surface and a lingual surface including a tip portion of said tooth, and thereby a mesio-distal position, a bucco-lingual position, a vertical position, a mesio-distal axis of tooth, a bucco-lingual axis of tooth and a degree of torsiversion, each in conformity with its predetermined tooth contour, can be determined respectively.

4. A method in accordance with claim 1, further comprising the steps of:
providing an artificial molar segment made of hard resin as a whole and formed as artificial molars (1D; 1U) designed for the lingualized occlusion, said artificial molar segment comprising two to four consecutive teeth selected from a group consisting of a first premolar, a second premolar, a first molar and a second molar in a maxilla or a mandible, which are interconnected in a single prosthesis;
positioning said artificial molar segment in a denture baseplate with said artificial anterior teeth having been secured thereto by baking; and
securing said artificial molar segment to said denture baseplate (12D, 12U) by baking.

5. A method in accordance with claim 4, in which a mesio-distal position, a bucco-lingual position, a vertical position, a mesio-distal axis of tooth, a bucco-lingual axis of tooth and a degree of torsiversion for each one of said artificial molars (1D, 1U) are respectively in conformity with an aesthetic standard and in complying with the general principle of occlusal contact manner.

6. A method in accordance with claim 5, in which said step of providing the artificial molar segment is defined as a step of providing the plurality of artificial molar segments, wherein said step further including a step of selecting one of said artificial molar segments by taking into account the continuity of aesthetic and occlusal contact relationship to said artificial anterior teeth.

7. A method in accordance with claim 4, in which an artificial maxillary molar in said dental prosthesis designed for the lingualized occlusion is configured to have a blade form in a lingual cusp thereof.

8. A method in accordance with claim 4, in which
a protrusion (2, 3, 51D, 51U) is formed in a buccal cusp of at least one artificial tooth among said first premolar, said second premolar, said first molar and said second molar of said artificial molar segment for either one of the maxilla or the mandible, and
said step of positioning said artificial molar segment is intended to define a gap for gliding movement to take place between said artificial molar (1D, 1U) of said artificial molar segment and an oppositely-located corresponding tooth in said dental prosthesis of artificial molars designed for the lingualized occlusion in the other of the maxilla or the mandible by using said protrusion.

9. A method in accordance with claim 4, in which a groove (4U, 4D) is formed in a bottom side of said dental prosthesis of two to four interconnected artificial molars (1D, 1U) designed for the lingualized occlusion, said groove (4D, 4U) extending throughout said two to four teeth and open at both ends of said prosthesis.

10. A method in accordance with claim 9, further comprising the step of, after said artificial molar segment having been secured to said denture baseplate (12D, 12U), packing said groove (4D, 4U) with resin for the baseplate.

11. A method in accordance with claim 1, further comprising the steps of:
providing an artificial molar segment formed as a dental prosthesis of artificial molars (1D, 1U) designed for the lingualized occlusion, comprising at least one of a first premolar, a second premolar, a first molar and a second molar, at least one of said artificial molars including a protrusion (2, 3, 51D, 51U) formed in a buccal cusp thereof;
positioning said artificial molar segment in a denture baseplate (12D, 12U) with said artificial anterior teeth (9D, 9U) having been secured thereto by baking; and
securing said artificial molar segment to said denture baseplate by baking.

12. A method in accordance with claim 1, further comprising the steps of:
providing an artificial molar segment comprising at least one artificial tooth of a first premolar, a second premolar, a first molar and a second molar, said at least one artificial tooth including a groove (4D, 4U) formed in a bottom side thereof, said groove extending in a mesio-distal direction and open at both ends of said at least one artificial tooth;
positioning said artificial molar segment in a denture baseplate (12D, 12U) with said artificial anterior teeth (9D, 9U) having been secured thereto by baking; and
securing said artificial molar segment to said denture base by baking.

13. A method in accordance with claim 12, further comprising a step of, after said artificial molar segment having been secured to said denture baseplate, packing said groove (4D, 4U) with resin for the baseplate.

## Patentansprüche

1. Verfahren zum Anordnen künstlicher Zähne durch Verwenden einer Vorrichtung (20T), bei dem die Vorrichtung die Vielzahl an Rückhaltelöchern (21) aufweist, in die entsprechende künstliche Frontzähne (9D, 9U), die ein künstliches Frontzahnsegment ausbilden, an ihren Spitzenabschnitten eingepasst werden können, wobei das Rückhalteloch ausgebildet ist, um eine Anordnung von jedem der eingepassten künstlichen Frontzähne (9d, 9U) gemäß ihrer vorgegebenen Zahnkontur festzulegen, wobei das Verfahren die folgenden Schritte umfasst:
Vorbereiten (100) eines Satz der Vorrichtungen für zumindest jede der Vielzahl Zahnkonturen;
Ermitteln (102) einer speziellen Zahnkontur, die für einen Gegenstand in den ein Gebiss einzupassen ist, anpassbar ist;
Auswählen (104) der Vorrichtungen, die der ermittelten Zahnkontur entsprechen;
Versehen (106) der ausgewählten Vorrichtung mit künstlichen Frontzähnen (9d, 9U) gemäß der ermittelten Zahnkontur; und
Befestigen der künstlichen Frontzähne (9d, 9U) durch Härten, die in die Vorrichtung eingepasst sind, an einer Gebissbasisplatte (12D, 12U) an vorgegebenen Orten davon.

2. Verfahren nach Anspruch 1, bei dem das künstliche Frontzahnsegment insgesamt sechs rechte und linke Zentralkinnladeninzisivzähne, Seiteninzisivzähne und Eckzähne, umfasst und wobei die vorgegebene Zahnkontur aus einer Gruppe umfassend konusförmige, eiförmige und quadratische Formen ausgewählt wird.

3. Verfahren nach Anspruch 1 oder 2, bei dem bei dem Schritt des Versehens der Vorrichtung mit künstlichen Frontzähnen jeder der entsprechenden künstlichen Frontzähne (9D, 9U), der in Kontakt mit der Vorrichtung (20T) an einer bukkalen Oberfläche und einer Zungenoberfläche, die einen Spitzenabschnitt des Zahnes umfasst, gerät und **dadurch** jeweils eine mesio-distale Position, eine bukko-linguale Position, eine vertikale Position, eine mesio-distale Achse des Zahnes, eine bukko-linguale Aches des Zahnes und ein Grad an Torsiversion jeweils gemäß seiner vorgegebenen Zahnkontur ermittelt werden können.

4. Verfahren nach Anspruch 1, ferner aufweisend die folgenden Schritte:
Vorsehen eines künstlichen Backenzahnsegmentes aus hartem Harz als ganzes und das als künstliche Backenzähne geformt ist, die für die lingualisierte Okkulsion gestaltet sind, wobei das künstliche Backenzahnsegment zwei bis vier aufeinanderfolgende Zähne, die aus einer Gruppe umfassend einen ersten Prämolaren, einen zweiten Prämolaren, einen ersten Backenzahn und einen zweiten Backenzahn in einer Maxilla oder einem Unterkiefer, die mit einer einzigen Prothese verbunden sind, ausgewählt sind;
Anordnen des künstlichen Backenzahnsegmentes in einer Gebissbasisplatte mit künstlichen Frontzähnen, die daran durch Härten befestigt sind; und
Befestigen des künstlichen Backenzahnsegmentes an der Gebissbasisplatte (12d, 12U) durch Härten.

5. Verfahren nach Anspruch 4, bei dem eine mesio-distale Position, eine bukko-linguale Position, eine vertikale Position, eine mesio-distale Achse des Zahnes, eine bukko-linguale Aches des Zahnes und ein Grad an Torsiversion von jedem der künstlichen Backenzähne (1D, 1U) jeweils gemäß einem ästhetischen Standart und in Übereinstimmung mit dem allgemeinen Prinzip der okkusalen Kontaktierungsweise ausgebildet sind.

6. Verfahren nach Anspruch 5, bei dem der Schritt des Vorsehens des künstlichen Backenzahnsegmentes durch einen Schritt des Vorsehens der Vielzahl an künstlichen Backenzahnsegmenten festgelegt ist, wobei der Schritt ferner einen Schritt des Auswählens von einem der künstlichen Backenzahnsegmente unter Berücksichtigung der Kontinuität der ästhetischen und okklusalen Kontaktbeziehung zu den künstlichen Frontzähnen umfasst.

7. Verfahren nach Anspruch 4, bei dem ein künstlicher, maxillarer Backenzahn der Dentalprothese, der zur lingualen Okkulssion gestaltet ist, ausgebildet ist, um eine Schneidenform in der lingualen Spitze davon aufzuweisen.

8. Verfahren nach Anspruch 4, bei dem ein Vorsprung (2, 3, 51D, 51U) in einer bukkalen Spitze von zumindest einem künstlichen Zahn unter dem ersten Prämolaren, dem zweiten Prämolaren, dem ersten Backenzahn und dem zweiten Backenzahn des künstlichen Backenzahnsegmentes für entweder die Maxilla oder den Unterkiefer ausgebildet ist, und
der Schritt des Positionierens des ersten künstlichen Backenzahnsegmentes gedacht ist, um eine Lücke zur Gleitbewegung festzulegen, die zwischen dem künstlichen Backenzahn (1D, 1U) des künstlichen Backenzahnsegmentes und dem gegenüber angeordneten entsprechenden Zahn in der Dentalprothese von künstlichen Backenzähnen, die für die lingualisierte Okklusion in der anderen Maxilla oder der dem Unterkiefer durch Verwenden des Vorsprungs gestaltet ist, festzulegen.

9. Verfahren nach Anspruch 4, bei dem eine Nut (4U, 4D) in einer Unterseite der Dentalprothese von zwei bis vier untereinander verbundenen Backenzähnen (1D, 1U), die für die lingualisierte Okklusion gestaltet ist, ausgebildet ist, wobei die Nut (4U, 4D) sich über die zwei bis vier Zähne erstreckt und an beiden Enden der Prothese geöffnet ist.

10. Verfahren nach Anspruch 9, ferner aufweisend, nachdem das künstliche Backenzahnsegment an der Gebissbasisplatte (12D, 12U) befestigt wurde, den Schritt des Füllens der Nut (4D, 4U) mit Harz für die Basisplatte.

11. Verfahren nach Anspruch 1, ferner aufweisend die folgenden Schritte:
Vorsehen eines künstlichen Backenzahnsegmentes, das als eine Dentalprothese aus künstlichen Backenzähnen (1D, 1U), die für die lingualisierte Okklusion gestaltet sind, geformt ist, umfassend zumindest einen ersten Prämolaren, einen zweiten Prämolaren, einen ersten Backenzahn und einen zweiten Backenzahn, wobei zumindest einer der künstlichen Backenzähne einen Vorsprung (2, 3, 51D, 51U) in einer bukkalen Spitze davon umfasst;
Anordnen des künstlichen Backenzahnsegmentes in einer Gebissbasisplatte (12D, 12U) mit den künstlichen Frontalzähnen (9D, 9U), die daran durch Härten befestigt sind, und
Befestigen des künstlichen Backenzahnsegmentes an der Gebissbasisplatte durch Härten.

12. Verfahren nach Anspruch 1, ferner aufweisend die folgenden Schritte:
Vorsehen eines künstlichen Backenzahnsegmentes umfassend zumindest einen künstlichen Zahn eines ersten Prämolaren, eines zweiten Prämolaren, eines ersten Backenzahns und eines zweiten Backenzahns, wobei zumindest ein künstlicher Zahn eine Nut (4D, 4U), die in einer Unterseite davon ausgebildet ist, umfasst, wobei die Nut sich in einer mesio-distalen Richtung erstreckt und an beiden Enden des zumindest einen künstlichen Zahnes offen ist,
Anordnen des künstlichen Backenzahnsegmentes in einer Gebissbasisplatte (12D, 12U) mit den künstlichen Frontalzähnen (9D, 9U), die daran durch Härten befestigt sind, und
Befestigen des künstlichen Backenzahnsegmentes an der Gebissbasisplatte durch Härten.

13. Verfahren nach Anspruch 12, ferner aufweisend, nachdem das künstliche Backenzahnsegment an der Gebissbasisplatte befestigt wurde, den Schritt des Füllens der Nut (4D, 4U) mit Harz für die Basisplatte.

## Revendications

1. Procédé pour agencer des dents artificielles en utilisant un gabarit (20T), dans lequel ledit gabarit a une pluralité de trous de retenue (21) dans lesquels des dents antérieures artificielles (9D, 9U) respectives constituant un segment de dents antérieures artificielles peuvent être montées dans leurs parties de pointe, ledit trou de retenue étant configuré afin de définir un agencement de chaque dent desdites dents antérieures artificielles (9D, 9U) ajustées en conformité avec son contour de dent prédéterminé, ledit procédé comprenant les étapes consistant à:
préparer (100) un ensemble desdits gabarits pour au moins chaque contour de la pluralité de contours de dent;
déterminer (102) un contour de dent spécifique adaptable pour un sujet destiné à être équipé d'une prothèse dentaire;
sélectionner (104) l'un des gabarits correspondant au contour de dent déterminé;
ajuster (106) le gabarit sélectionné avec les dents antérieures artificielles (9D, 9U) en conformité avec le contour de dent déterminé; et
fixer (110) par cuisson, lesdites dents antérieures artificielles (9D, 9U) telles qu'ajustées dans ledit gabarit sur une plaque de base de prothèse dentaire (12D, 12U) à leurs emplacements prédéterminés.

2. Procédé selon la revendication 1, dans lequel ledit segment de dents antérieures artificielles comprend un total de six incisives centrales maxillaires droites et gauches, des incisives et des canines latérales et ledit contour de dent prédéterminé est choisi dans un groupe comprenant les formes conique, ovoïde et carrée.

3. Procédé selon la revendication 1 ou 2, dans lequel ladite étape consistant à ajuster ledit gabarit avec lesdites dents antérieures artificielles, chacune desdites dents antérieures artificielles (9D, 9U) respectives venant en contact avec ledit gabarit (20T) dans une surface buccale et une surface linguale comprenant une partie de pointe de ladite dent, et ainsi une position mésio-distale, une position bucco-linguale, une position verticale, un axe mésio-distal de dent, un axe de bucco-lingual de dent et un degré de torsiversion, chacun en conformité avec son contour de dent prédéterminé, peuvent être déterminés respectivement.

4. Procédé selon la revendication 1, comprenant en outre les étapes consistant à:
prévoir un segment de molaires artificielles réalisé avec une résine dure dans son ensemble et formé en tant que molaires artificielles (1D; 1U) conçues pour l'occlusion lingualisée, ledit segment de molaires artificielles comprenant de deux à quatre dents consécutives choisies dans un groupe comprenant une première prémolaire, une deuxième prémolaire, une première molaire et une deuxième molaire dans un maxillaire supérieure ou un maxillaire inférieur, qui sont interconnectées dans une seule prothèse;
positionner ledit segment de molaires artificielles dans une plaque de base de prothèse dentaire avec lesdites dents antérieures artificielles qui y ont été fixées par cuisson; et
fixer ledit segment de molaires artificielles à ladite plaque de base de prothèse dentaire (12D, 12U) par cuisson.

5. Procédé selon la revendication 4, dans lequel une position mésio-distale, une position bucco-linguale, une position verticale, un axe mésio-distal de la dent, un axe bucco-lingual de la dent et un degré de torsiversion de chaque molaire desdites molaires artificielles (1b, 1U) sont respectivement en conformité avec un standard esthétique et se conformant au principe général en matière de contact occlusal.

6. Procédé selon la revendication 5, dans lequel ladite étape consistant à prévoir le segment de molaires artificielles est définie en tant qu'étape consistant à prévoir la pluralité de segments de molaires artificielles, dans lequel ladite étape comprend en outre une étape consistant à sélectionner un segment desdits segments de molaires artificielles en prenant en compte la continuité de la relation de contacts esthétique et occlusal par rapport auxdites dents antérieures artificielles.

7. Procédé selon la revendication 4, dans lequel une molaire maxillaire artificielle dans ladite prothèse dentaire conçue pour l'occlusion lingualisée est configurée pour avoir une forme de lame dans sa cuspide linguale.

8. Procédé selon la revendication 4, dans lequel une saillie (2, 3, 51D, 51U) est formée dans une cuspide buccale d'au moins une dent artificielle parmi ladite première prémolaire, ladite deuxième prémolaire, ladite première molaire et ladite deuxième molaire dudit segment de molaires artificielles pour l'un ou l'autre parmi le maxillaire supérieur ou le maxillaire inférieur, et
ladite étape consistant à positionner ledit segment de molaires artificielles est prévue pour définir un espace pour que le mouvement de glissement ait lieu entre ladite molaire artificielle (1D, 1U) dudit segment de molaires artificielles et une dent correspondante positionnée à l'opposé dans ladite prothèse dentaire de molaires artificielles conçues pour l'occlusion lingualisée dans l'autre parmi le maxillaire supérieur ou le maxillaire inférieur en utilisant ladite saillie.

9. Procédé selon la revendication 4, dans lequel une rainure (4U, 4D) est formée dans un côté inférieur de ladite prothèse dentaire de deux à quatre molaires artificielles interconnectées (1D, 1U) conçues pour l'occlusion lingualisée, ladite rainure (4D, 4U) s'étendant sur toutes lesdites deux à quatre dents et s'ouvre aux deux extrémités de ladite prothèse.

10. Procédé selon la revendication 9, comprenant en outre l'étape consistant à, après que ledit segment de molaires artificielles a été fixé à ladite plaque de base de prothèse dentaire (12D, 12U) remplir ladite rainure (4D, 4U) avec de la résine pour la plaque de base.

11. Procédé selon la revendication 1, comprenant en outre les étapes consistant à:
prévoir un segment de molaires artificielles formé comme une prothèse dentaire de molaires artificielles (1D, 1U) conçue pour l'occlusion lingualisée, comprenant au moins l'une parmi une première prémolaire, une deuxième prémolaire, une première molaire et une deuxième molaire, au moins une molaire desdites molaires artificielles comprenant une saillie (2, 3, 51D, 51U) formée dans sa cuspide buccale;
positionner ledit segment de molaires artificielles dans une plaque de base de prothèse dentaire (12D, 12U) avec lesdites dents antérieures artificielles (9D, 9U) qui y ont été fixées par cuisson; et
fixer ledit segment de molaires artificielles sur ladite plaque de base de prothèse dentaire par cuisson.

12. Procédé selon la revendication 1, comprenant en outre les étapes consistant à:
prévoir un segment de molaires artificielles comprenant au moins une dent artificielle parmi une première prémolaire, une deuxième prémolaire, une première molaire et une deuxième molaire, ladite au moins une dent artificielle comprenant une rainure (4D, 4U) formée dans son côté inférieur, ladite rainure s'étendant dans une direction mésio-distale et s'ouvre au niveau des deux extrémités de ladite au moins une dent artificielle;
positionner ledit segment de molaires artificielles dans une plaque de base de prothèse dentaire (12D, 12U) avec lesdites dents antérieures artificielles (9D, 9U) qui y ont été fixées par cuisson; et
fixer ledit segment de molaires artificielles sur ladite base de prothèse dentaire par cuisson.

13. Procédé selon la revendication 12, comprenant en outre une étape consistant à, après que ledit segment de molaires artificielles a été fixé sur ladite plaque de base de prothèse dentaire, remplir ladite rainure (4D, 4U) avec de la résine pour la plaque de base.
